# EUROPEAN PATENT APPLICATION

(11) **EP 3 381 341 A1**
(43) Date of publication of application: **03.10.2018**
(21) Application number: 18164744.7
(22) Date of filing: 28.03.2018
(51) Int. Cl.: A47J 43/08, H02K 16/02

(54) **KITCHEN APPLIANCE AND ELECTRIC MOTOR ARRANGEMENT THEREFORE**

(30) Priority: 31.03.2017 GB 201705229
(71) Applicant: Kenwood Limited, Havant, Hampshire PO9 2NH (GB)
(72) Inventor: FIELDS, Robert, Havant, Hampshire PO9 2NH (GB); PALMER, Paul, Havant, Hampshire PO9 2NH (GB); GRUNDY, Gilman, Havant, Hampshire PO9 2NH (GB)
(74) Representative: Hector, Annabel Mary

(57) **Abstract**

A kitchen appliance 100 for processing food, such as a hand blender, comprises an anti-torque mechanism, wherein the anti-torque mechanism is arranged so as to counter the torque exerted on the kitchen appliance by moving parts of the kitchen appliance, such as a motor for driving a tool of the appliance, for example by counter-rotating relative to the motor. This can reduce forces acting on the hand of the user.

## Description

The present invention relates to a kitchen appliance, and in particular to a hand tool such as a hand blender. The present invention also relates to an apparatus for the kitchen appliance, and in particular to a motor-arrangement for driving the hand tool.

In a first aspect of the invention, there is provided a hand tool comprising a rotary tool and an electric motor arrangement configured to drive the rotary tool to rotate, the electric motor arrangement comprising two or more counter-rotating rotors and one or more stators surrounding and configured to drive the counter-rotating rotors to rotate in opposite directions about the same axis. In this way gyroscopic force and acceleration/deceleration forces acting on a hand of a user of the hand tool may be eliminated or reduced by the counter-rotation of the rotors.

This invention arises from the realisation pursuant to the present invention that gyroscopic forces acting on kitchen appliances such, for example, as a hand blender comprising an electric motor may result in undesirable vibration and can be a source of discomfort for users. In tasks requiring accuracy, gyroscopic forces may make, for example, tilting of the tool difficult, which may cause inaccuracy.

Additionally, torque created by reaction against the acceleration and deceleration action of the motor applies forces to the hand of the user. These may also lead to discomfort and inaccuracy during use.

The largest moving mass, and thus largest source of gyroscopic force and acceleration/deceleration forces, within the motor-housing of a hand tool is made up of the components of the motor itself. The largest of these is often the rotor of the electric motor.

The present invention therefore seeks to provide a device in which the gyroscopic force and acceleration/deceleration force experienced by a user of an electric hand tool due to the motion of at least the rotor may be reduced. It also seeks to provide a motor-system in which the versatility of the motor is increased.

Preferably, the electric motor arrangement comprises two or more electric motors, with each of the two or more electric motors comprising at least one of the counter-rotating rotors and one of the stators. In this way the advantageous counter-rotation can be achieved in a relatively simple fashion by simply providing two or more motors, each of which naturally has at least one rotor and stator.

Preferably, the electric motor arrangement is a reluctance motor arrangement, and the one or more stators comprises a set of windings configured to drive at least two of the two or more counter-rotating rotors in opposite directions. This achieves the counter-rotating effect without requiring multiple motors.

Preferably, the set of windings comprises poles a sequential order of which, going in a clockwise direction, is reversed between a first end of the set of windings surrounding at least one of the two or more counter-rotating rotors and a second end of the set of windings surrounding another of the two or more counter-rotating rotors, such that energizing of the poles by control circuitry causes rotors surrounded by the first end to rotate in an opposite direction to those surrounded by the second end. In this way counter-rotation of the rotors can be achieved using the same switching control as might be used in an ordinary reluctance motor.

Preferably, the reluctance motor arrangement comprises rotor position sensing means for detecting a rotor position of each of the two or more counter-rotating rotors, and control circuitry configured to selectively energize poles of the set of windings based on the rotor position of the two or more counter-rotating rotors such that at least one of the two or more counter-rotating rotors is driven to rotate in an opposite direction to another of the two or more counter-rotating rotors. This arrangement has the advantage that control circuitry may also drive the poles in the same direction through selective pole energising if so desired.

Preferably, the hand tool further comprises switching means for selectively electrically isolating a portion of the set of windings surrounding at least one of the two or more rotors from the rest of the set of windings for preventing the portion of the set of windings from driving the at least one of the two or more rotors surrounded by it to rotate. In this way the rotors to be driven may be selected.

Preferably, rotary drive is transmitted from the electric motor arrangement to the rotary tool via a bevel gear receiving drive from at least two of the two or more counter-rotating rotors. In this way transmission can be achieved using a single gear connected to both motors.

Preferably, rotary drive is transmitted from the electric motor arrangement to the rotary tool via a shaft driven directly by at least one of the two or more counter-rotating rotors, the shaft receiving rotary drive via an idler gear from another of the two or more counter-rotating rotors. This is advantageous in that it may allow the rotors to be of the same orientation and to be spaced apart.

Preferably, the rotary tool comprises counter-rotating elements. This may help eliminate or reduce the gyroscopic effect and acceleration/deceleration forces of the rotary tool acting on the hand of the user.

In another aspect of the invention, a reluctance motor arrangement is provided comprising a set of windings surrounding two or more rotors; wherein the set of windings is configured to drive at least two of the two or more rotors in opposite directions.

Preferably, the set of windings comprises poles a sequential order of which, going in a clockwise direction, is reversed between a first end of the set of windings surrounding at least one of the two or more rotors and a second end of the set of windings surrounding another of the two or more rotors, such that energizing of the poles by control circuitry causes rotors surrounded by the first end to rotate in an opposite direction to those surrounded by the second end.

Preferably, the reluctance motor arrangement further comprises rotor position sensing means for detecting a rotor position of each of the two or more counter-rotating rotors, and control circuitry configured to selectively energize poles of the set of windings based on the rotor position of the two or more rotors so that at least one of the two or more rotors is driven to rotate in an opposite direction to another of the two or more counter-rotating rotors.

Preferably, the reluctance motor arrangement further comprises switching means for selectively electrically isolating a portion of the set of windings surrounding at least one of the two or more rotors from the rest of the set of windings for preventing the portion of the set of windings from driving the at least one of the two or more rotors surrounded by the portion of the set of windings to rotate. In his way rotors may be selectively driven to rotate.

Preferably, the set of windings comprises poles a sub-set of which do not drive at least one but not all of the two or more rotors to rotate, for driving the at least one but not all of the rotors to rotate more slowly than a remainder of the motors.

Preferably, the subset is electrically isolated along part of their length surrounding the at least one but not all of the two rotors, for driving the at least one but not all of the rotors to rotate at a slower speed compared to a remainder of the two or more rotors.

Preferably, the two or more rotors rotate coaxially. This may help further reduce gyroscopic and acceleration/deceleration effects.

Preferably, the reluctance motor arrangement is one of a switched reluctance motor and a synchronous reluctance motor.

Preferably, a hand tool is provided comprising the reluctance motor arrangement.

Preferably, a stand-alone kitchen appliance comprising the reluctance motor arrangement is provided.

According to another aspect of the invention, there is provided a kitchen appliance for processing food, comprising: an anti-torque mechanism, wherein the anti-torque mechanism is arranged so as to counter the torque exerted on the kitchen appliance by moving parts of the kitchen appliance.

Preferably, as used herein the term "anti-torque mechanism" connotes a mechanism for counteracting - partially or entirely - torque that is experienced by a body so as to prevent rotation of that body due to that torque.

Preferably the anti-torque mechanism is arranged to counter the torque exerted on the kitchen appliance by the moving parts of the kitchen appliance by at least 25%, more preferably by at least 50%, more preferably still by at least 60%, and yet more preferably by at least 80%. Preferably, the anti-torque mechanism is arranged so as substantially to counter the torque exerted on the kitchen appliance by the moving parts of the kitchen appliance.

Preferably, the anti-torque mechanism provides a torque that is equal and opposite to the torque exerted on the kitchen appliance by the moving parts of the kitchen appliance.

Preferably, the anti-torque mechanism is driven so as to counter the torque exerted on the kitchen appliance by the moving parts of the kitchen appliance.

Preferably, the kitchen appliance further comprises a motor for driving a tool of the kitchen appliance, wherein the moving parts of the kitchen appliance include at least the motor. Preferably, only the motor drives the tool.

The term "moving parts of the kitchen appliance" as used herein may also include any components that are driven by the motor, including, for example, any, some or all of: gearing; drive shafts; tools; drive transfer mechanisms; and/or food that is being processed by the kitchen appliance. The term "moving parts of the kitchen appliance" may exclude the anti-torque mechanism.

Preferably, the anti-torque mechanism is arranged to counter-rotate relative to the motor. Preferably, the anti-torque mechanism is arranged to rotate about an axis that is coaxial to the drive axis of the motor. Preferably, the anti-torque mechanism is arranged to contra-rotate relative to the motor. Preferably, as used herein the term "counter-rotating" (or any similar term) connotes rotation (for example, spin and/or orbital rotation) in different directions about one or more axis/axes. Preferably, as used herein the term "contra-rotating" (or any similar term) connotes rotation in different directions about a common axis, that is contra-rotation may be counter-rotation about a common axis.

Preferably, the masses and/or dimensions of the moving parts of the kitchen appliance and the anti-torque mechanism is/are substantially equal.

Preferably, the moving parts of the kitchen appliance and the anti-torque mechanism are configured to be driven at substantially the same speed, and more preferably at the same speed. Preferably, the motor and the anti-torque mechanism are configured to be driven at substantially the same speed, and more preferably at the same speed.

The kitchen appliance may further comprise a controller for varying the torque of the moving parts of the kitchen appliance and/or of the anti-torque mechanism. Preferably, the controller is arranged to vary the torque of the motor.

The kitchen appliance may further comprises a sensor for sensing speed, torque and/or current of the motor and/or anti-torque mechanism, and the torque of the anti-torque mechanism may be adapted to be varied by the controller in dependence on the sensor readings.

Preferably, the anti-torque mechanism comprises a rotating mass, for example a flywheel.

Preferably, the anti-torque mechanism is driven by the moving parts of the kitchen appliance, for example by means of suitable gearing, and more preferably by the motor. Preferably, the anti-torque mechanism consists of a rotating mass.

Preferably, both the motor and the anti-torque mechanism drive a tool of the kitchen appliance. Preferably, the motor and the anti-torque mechanism drive the same tool. Preferably, the motor and the anti-torque mechanism counter-rotate elements of a counter-rotating tool. Preferably, the tool is driven directly by only one of the motor and the anti-torque mechanism. Preferably, drive is transmitted to the tool by means of a gearing arrangement.

Preferably, the motor drives the anti-torque mechanism so as to counter the torque exerted on the kitchen appliance by the moving parts of the kitchen appliance.

Preferably, the anti-torque mechanism comprises a second motor that drives the anti-torque mechanism so as to counter the torque exerted on the kitchen appliance by the moving parts of the kitchen appliance. Preferably, the second motor is separate to the said motor. Preferably, the anti-torque mechanism is the second motor. Preferably, the kitchen appliance further comprises control circuitry configured selectively to energise the motors, such that each motor is independently operable, and more preferably the motors are independently operable as to speed, direction, and/or torque.

Preferably, the motor comprises the anti-torque mechanism, and the motor is arranged to drive the anti-torque mechanism so as to counter the torque exerted on the kitchen appliance by the moving parts of the kitchen appliance.

Preferably, the motor comprises at least two rotors, and both rotors share a common stator. Preferably, one of the rotors is associated with driving a tool, and another rotor is associated with driving the anti-torque mechanism. Preferably, as used herein the term "stator" is the static part of a motor that is used to generate an electromotive force, and the term "rotor" is the moving part of a motor that is subjected to the electromotive force from the stator.

Preferably, the stator is configured to drive the at least two rotors in opposite directions.

Preferably, the stator comprises a plurality of poles, wherein the poles are arranged so that the direction in which successive poles are energized changes at a location between the at least two rotors so that the at least two rotors rotate in opposite directions.

Preferably, the stator comprises a plurality of poles comprising windings, wherein the windings cross one another at a location between the at least two rotors.

Preferably, the stator comprises a plurality of poles, wherein the poles are non-intersecting with the drive axis of the motor.

The kitchen appliance may further comprise a sensor for sensing orientation of at least one of the rotors.

The kitchen appliance may further comprise control circuitry configured selectively to energise a portion of the stator and/or a portion of the rotors based on the orientation of at least one of the rotors, preferably so as to drive the rotors in opposite directions and/or to control the speed of at least one of the rotors. Preferably, a portion of the stator is a subset of the plurality of poles of the stator, and a portion of the rotors is one of the rotors or a subset, on one or both of the rotors, of a plurality of poles of the rotors.

The kitchen appliance may further comprise a switch for selectively electrically isolating a portion of the stator and/or the rotors so as to control the speed of at least one of the rotors. The kitchen appliance may further comprise a current controller for selectively controlling current output to a portion of the stator and/or the rotors so as to control the speed and/or direction of at least one of the rotors. Preferably, the aforementioned "controller" is the "current controller". Preferably, the switch and/or current controller drive the rotors so as to prevent the rotors from coming to rest in the same orientation, for example as determined by the sensor.

Preferably, the motor is a reluctance motor, and more preferably a switched reluctance or a synchronous reluctance motor. Preferably, the second motor is a reluctance motor, and more preferably a switched reluctance or a synchronous reluctance motor.

Preferably, the motor and the anti-torque mechanism comprise drive outputs, the drive outputs being arranged to face one another. Preferably, the motor and the anti-torque mechanism comprise drive outputs, the drive outputs being arranged to face away from one another. Preferably, the motor and the anti-torque mechanism comprise drive outputs, the drive outputs being arranged to face the same direction.

Preferably, the kitchen appliance is a hand tool, for example a hand blender or mixer.

According to yet another aspects of the invention, there is provided a kitchen appliance for processing food comprising: at least one motor; two rotors, wherein the two rotors are associated with the at least one motor; and a drive shaft, driven by the two rotors, for driving a tool of the kitchen appliance.

The kitchen appliance may, for example, comprise two motors, wherein one of the two rotors is associated with one motor, and the other rotor is associated with the other motor. Alternatively, the kitchen appliance may comprise one motor comprising the two rotors. Preferably, the kitchen appliance is a hand-held kitchen appliance. Preferably, the motors and/or the rotors are arranged to counter-rotate, and more preferably to contra-rotate. Preferably, all the motors and/or rotors drive the same tool.

According to a further aspect of the invention, there is provided an electric motor arrangement comprising: a stator; and at least two rotors; wherein the at least two rotors are arranged so that they are driven by the stator. The at least two rotors may be arranged either within the stator or surrounding the stator, or the stator may be interleaved between the two rotors. Preferably, only a single stator is provided. Preferably, the rotors and the stator are coaxial. Preferably, the stator is shared by the at least two rotors. Preferably, the electric motor arrangement is a reluctance motor.

Preferably, the stator is configured to drive two of the at least two rotors in opposite directions.

Preferably, the stator comprises a plurality of poles, wherein the poles are arranged so that the direction in which successive poles are energized changes at a location between the rotors so that the at least two rotors rotate in opposite directions.

Preferably, the stator comprises a plurality of poles comprising windings, wherein the windings cross one another at a location between the at least two rotors. Preferably, the windings cross over at a location on the axis of rotation of the at least two rotors.

Preferably, the stator comprises a plurality of poles, and the plurality of poles are non-intersecting with the axis of rotation of the at least two rotors. Preferably, each pole is parallel to one another.

The electric motor arrangement may further comprise a sensor for sensing orientation of at least one of the rotors, preferably relative to the poles of the stator.

The electric motor arrangement may further comprise control circuitry configured selectively to energise a portion of the stator and/or a portion of the at least two rotors based on the sensed orientation of at least one of the rotors, so as to control the speed and/or direction of at least one of the rotors.

The electric motor arrangement may further comprise a switch for selectively electrically isolating a portion of the stator and/or a portion of the at least two rotors so as to control the speed of at least one of the rotors. Preferably, the switch selectively electrically isolates a portion of the stator and/or a rotor so as not to cause rotation of at least one rotor.

The electric motor arrangement may further comprise a current controller for selectively controlling current output to a portion of the stator and/or a portion of the at least two rotors so as to control the speed and/or direction of at least one of the rotors.

Preferably, the at least two rotors are arranged to rotate coaxially.

Preferably, the electric motor arrangement is a reluctance motor, and more preferably a switched reluctance or a synchronous reluctance motor.

The invention extends to a kitchen appliance for processing food comprising the aforementioned electric motor arrangement, preferably wherein the kitchen appliance is a hand-held kitchen appliance.

The invention also extends to a kitchen appliance substantially as herein described and shown.

The invention also extends to an electric motor arrangement substantially as herein described and shown.

The invention also extends to a hand tool substantially as described herein with reference to the drawings.

The invention also encompasses a kit of parts for constructing any of the apparatuses or apparatus elements herein described.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances, and any reference to "food" herein may be replaced by such working mediums.

The invention described here may be used in any kitchen appliance and/or as a stand-alone device. This includes any domestic food-processing and/or preparation machine, including both top-driven machines (*e.g.* stand-mixers) and bottom-driven machines (*e.g.* blenders). It may be implemented in heated and/or cooled machines. It may be used in a machine that is built-in to a work-top or work surface, or in a stand-alone device. The invention can also be provided as a stand-alone device.

One or more aspects will now be described, by way of example only and with reference to the accompanying drawings having like-reference numerals, in which:
Fig. 1 shows a schematic drawing of a hand tool according to a first embodiment;
Fig. 2 shows a schematic drawing of a hand tool according to a second embodiment;
Fig. 3 shows a schematic drawing of a hand tool according to a third embodiment;
Figs. 4a-4c illustrate schematically a first embodiment motor arrangement; and
Figs. 5a-5c illustrate schematically a second embodiment of a motor arrangement.

### Specific Description

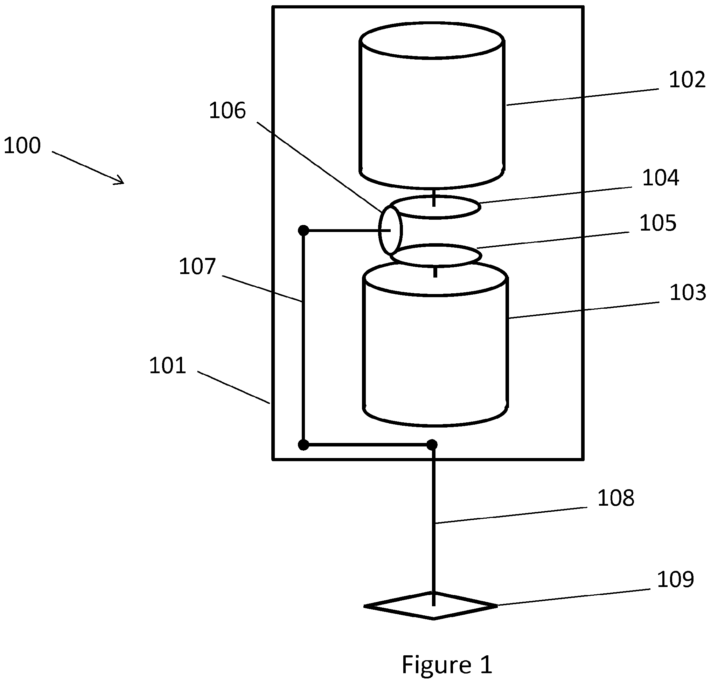

Fig. 1 illustrates a hand tool 100 according to a first example. Hand tool 100 includes a hollow housing 101 designed and dimensioned to fit within the hand of a user, and which can contain batteries or an input for mains power for powering the motors 102 and 103, electronics for controlling the motors, and a user-interface featuring an on/off switch and speed-control for controlling the device and providing feedback regarding the device to the user.

Upper motor 102 and lower motor 103 are housed within the housing 101 and respectively drive upper gear 104 and lower gear 105. Motors 102 and 103 and gears 104 and 105 are preferably aligned so as to rotate during operation about the same axis (e.g., a central axis of the housing 101).

Upper motor 102 and lower motor 103 rotate in opposite directions. For example, if upper motor 102 rotates in a clock-wise direction relative to a central axis of the hand tool 100, the lower motor 103 will rotate in an anti-clockwise direction. Likewise upper and lower gears 104 and 105 rotate in opposing directions.

Upper gear 104 and lower gear 104 contact the bevel gear 106 at an edge via e.g., teeth or frictional contact to drive the bevel gear 106 to rotate. The rotary force of the bevel gear 106 is then transmitted via gearing arrangement 107 to the drive shaft 108 which drives the rotary tool 109 to provide useful work. Drive shaft 108 and rotary tool 109 are also preferably aligned with, and rotate about, a central axis of the housing 101.

As the upper motor 102 and the lower motor 103 are axially aligned and rotate in opposing directions relative to a central axis of the housing 100, any gyroscopic or acceleration/deceleration force generated by one is cancelled out by the force of the other (assuming equal speeds of rotation and masses of the rotors of each of the motors). The same is true of the upper gear 104 and the lower gear 105.

Where the tool 109, shaft 108, and the gearing arrangement 107 are of sufficient mass to generate significant levels of gyroscopic force during rotation, then the motor (102 or 103) that rotates in the opposite direction to e.g., the tool 109 (and/or shaft 108) is provided with additional mass (relative to the other of the motors 102 and 103) to cancel out the additional force.

Alternatively tool 109, shaft 108, and gearing 107 may also comprise counter-rotating (a term which, as used herein, preferably includes contra-rotating) elements. For example, tool 109 may comprise two or more counter-rotating bladed tools or whisks.

More than two motors may be provided. Where an odd number of motors are provided, the mass and speed of rotation of the motors is preferably balanced such that gyroscopic and acceleration/deceleration forces are cancelled out. For example, where there are three motors, one rotating clockwise and two rotating anti-clockwise, the mass of the rotor of the clockwise-rotating motor may be twice that of the anti-clockwise-rotating motors such that it balances them out.

Alternatively, only one motor may be provided, with a counter-weight (i.e., a rotor, albeit not one driven to rotate directly by the windings of the motor) connected to it via a gearing system such that the counter-weight is driven to rotate by the motor in an opposite direction to the motor.

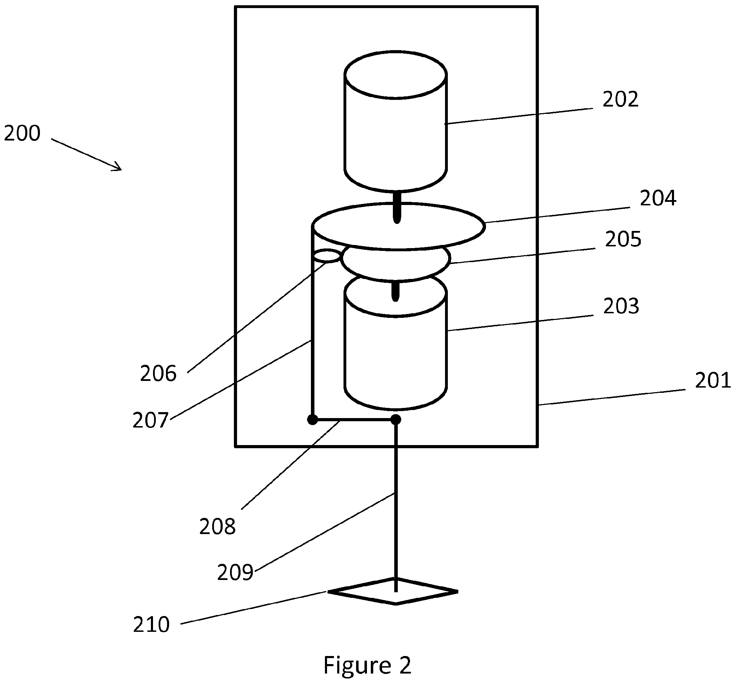

Fig. 2 illustrates a second example of a hand tool that is identical to the hand tool shown in Fig 1, with the exception that in this example upper gear 204 has a larger diameter than lower gear 205, and drives shaft 207 directly. By contrast the driving force of the lower gear 205 is communicated to shaft 207 by an idler gear 206. Thus whilst upper motor 202 and lower motor 203 rotate in opposite directions relative to a central axis of the housing 201, ultimately the driving force imparted to shaft 207 is in the same direction of rotation. This rotational force is then carried by gearing arrangement 208 to drive shaft 209 to drive rotary tool 210.

The arrangement of Fig. 2 is advantageous in that it allows the motors to be oriented either in opposite directions (as shown in Fig. 2) or in the same direction (i.e., motor 202 could be oriented with its drive-shaft pointing upwardly and shaft 207 extended to contact upper gear 204). This may be useful for simplifying construction as it allows the motors 202 and 203 to be inserted into the housing 201 with the same orientation.

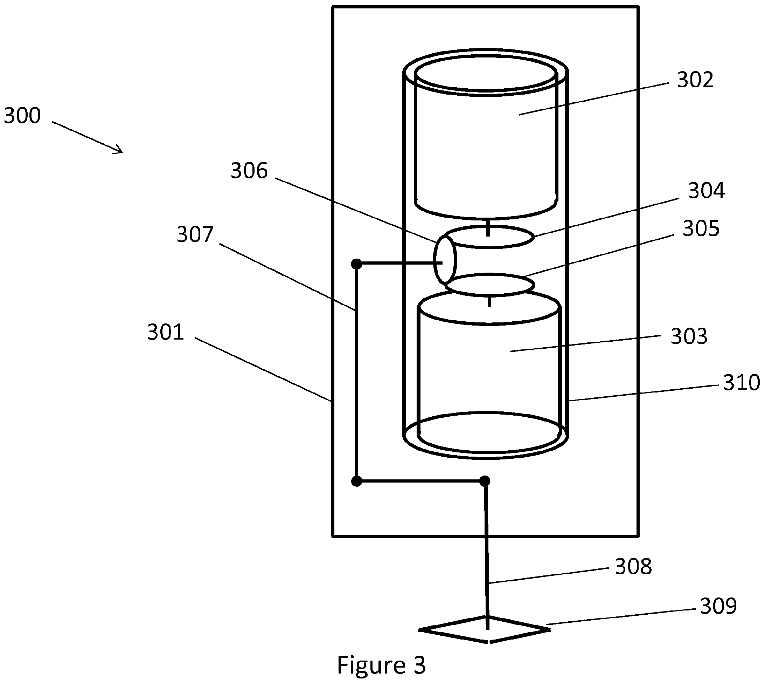

Fig. 3 illustrates a hand tool 300 according to a third embodiment . In this arrangement, rather than being driven by separate motors as in Figs. 1-2 (each comprising a respective rotor and stator), rotary tool 309 is driven (via shaft 308, gearing arrangement 307, bevel gear 306, and upper and lower gears 304 and 305) by counter-rotating rotors 302 and 303, which are positioned within the windings of a reluctance motor 310 (e.g., a switched or synchronous reluctance motor) contained within the housing 301. This arrangement has the advantage of reducing the number of components needed in the construction of hand tool 300, as only one set of windings 310 is needed to drive two counter-rotating rotors 302 and 303 to achieve gyroscopic and acceleration/deceleration force elimination/reduction.

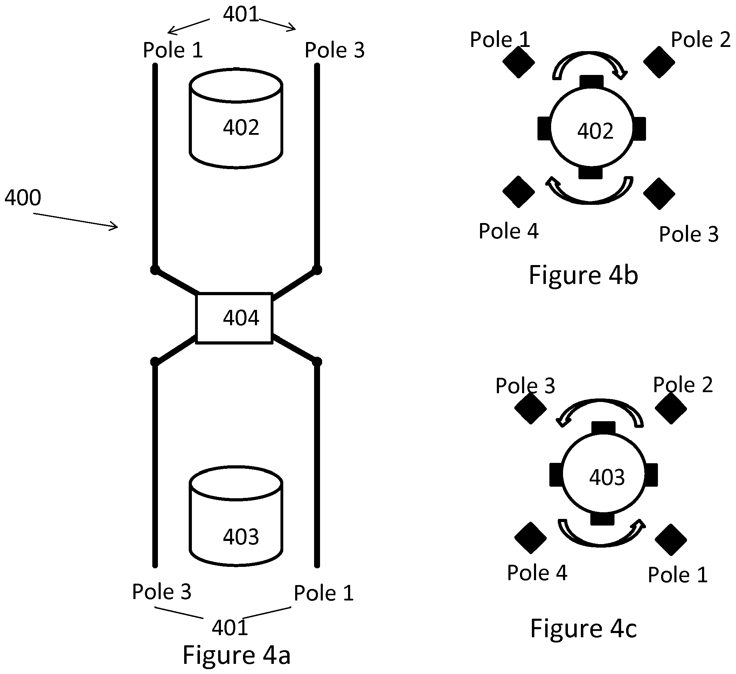

One way of achieving the driving of two rotors by one set of windings is illustrated in Figs. 4a-4c, which shows a synchronous reluctance motor 400 having windings 401 with two or more stator poles (Pole 1, Pole 3). Two rotors (preferably coaxial) are located within the windings - an upper rotor 402 and a lower rotor 403. Electric current is selectively applied by control circuitry though the windings 401 to the poles in sequence to achieve driving of the rotors 402 and 403. However, as is shown in Figs 4b-4c, the order of the poles of the windings 401 is reversed between the upper end of the windings 401 and the lower end of the windings 401 from clockwise to anti-clockwise by, e.g., having the poles of the windings 401 cross over at a mid-point of the windings 401 to the opposite side of the rotor. Current applied sequentially to the poles in numerical order to drive the upper rotor 402 in a clockwise direction will act to drive the lower rotor 403 in an anti-clockwise direction.

This arrangement is advantageous in that it is relatively simple to control, requiring only the same control-circuitry and software as might be needed to drive a single-rotor reluctance motor. Whilst sequential energising of the poles in numerical order is used as an example, other ways of sequentially energising the poles may be used in more complex arrangements.

An arrangement such as that shown in Figs. 4a-4c may also be used in a stand-alone appliance such as a stand-mixer to provide, for example, upward and/or downward drives from the head of the stand mixer. Switching 404 might be provided at the cross-over point of the windings 401 suitable for selectively enabling/disabling current flow through the upper/lower sections of the windings 401 for selectively driving either or both of the rotors 402 and 403. Drive might similarly be selectively provided to either or both of the drive-outlets of a concentric dual-drive arrangement by the rotors 402 and 403. To make the rotors 402 and 403 rotate at different speeds, only some (i.e., a sub-set) of the poles of the windings 401 may extend into the lower half to drive rotor 403, or the switching 404 may selectively only allow current to flow to some, not all of the poles at the lower end of the windings 401. Whilst four stator poles and four rotor poles are shown, any suitable number of poles may be selected for each.

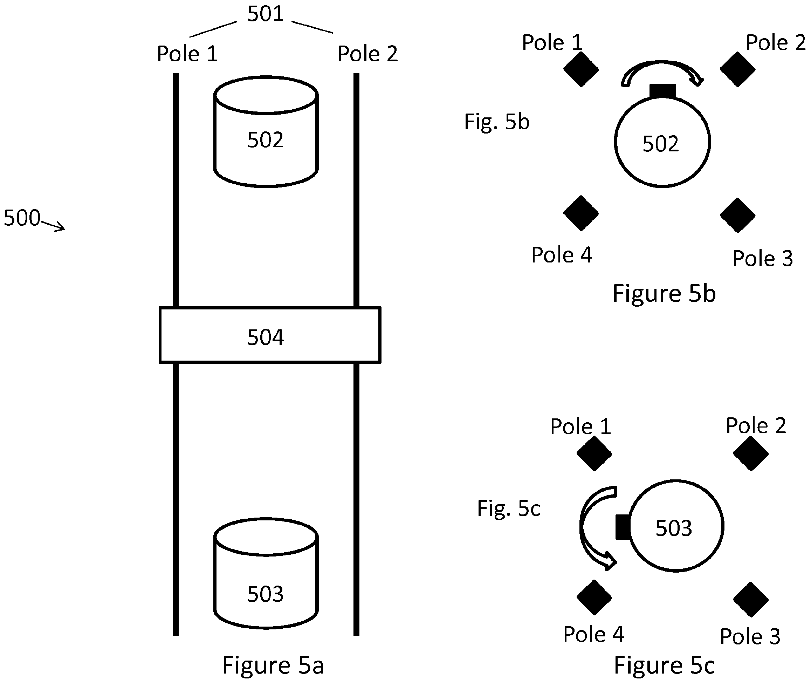

Figs. 5a-5c illustrates another way of achieving two counter-rotating rotors within a single set of windings. Motor 500 is a reluctance motor such as a switched or synchronous reluctance motor, and has windings 501 surrounding upper rotor 502 at an upper end of the windings 501 and lower rotor 503 at a lower end of the windings 503.

The term "surround" or "surrounding" as used herein, preferably, does not necessarily indicate that the rotors are surrounded on all sides and in all directions, but simply that the windings 501 are arranged about the rotors 502 and 503 in sufficient closeness to be able to drive them to rotate.

As can be seen in Figs. 5b and 5c, when the pole of the rotor 502 is close to, and behind (in a clockwise direction) Pole 2 of windings 501. Pole 2 is energised to attract the pole of the rotor 502 towards it, thus driving the rotor 502 to rotate in a clockwise direction. At the same time, the pole of the rotor 503 is relatively far away from Pole 2 and relatively uninfluenced by it, however, the pole of rotor 503 is behind (in an anti-clockwise direction) and relatively close to Pole 4 of the windings, and Pole 4 can thus be energised to drive pole 503 is an anti-clockwise direction. Choice of which pole of the windings 501 to energise to achieve this affect may be carried out by control circuitry based on rotor position information sensed by a rotor position sensors.

At least twice per rotation (in this example) rotors 502 and 503 will move towards the same poll of the windings 501. For example, after rotating past Pole 2 upper rotor 502 will rotate towards Pole 3, and at the same time after passing Pole 4 lower rotor 503 will rotate towards Pole 3. However, they will approach it from opposite directions (clockwise and anti-clockwise) so their momentum will prevent them subsequently moving in the same direction.

Care would have to be taken to prevent the rotors 502 and 503 coming to rest with the same orientation as this would make it difficult to start them rotating again in opposite directions. One way of solving this issue is for the control circuitry to be aware of rotor-position (e.g., using feedback from a hall-sensor sensing a permanent magnet associated with the rotors, or using cyclical variations in current through the windings 501 caused by rotation of the rotors 502 and 503), and programmed, on deactivation of the motor 500, to magnetically break the rotors 502 and 503 such that they come to rest with different orientation or (if desired) move them to the same orientation. Other means might be used - for example the rotors 502 and 503 may be biased (e.g., mechanically or magnetically by e.g. permanent magnets) to come to rest with different orientation.

This arrangement has the advantage that control circuitry may optionally drive both rotors in the same direction by pulsing/energising the poles so as to carry this out.

Switching 504 may be provided between upper and lower parts of the windings 501 for selectively allowing current to flow from the upper part of the windings 501 to the lower part of the windings 501. In this way, similarly to the embodiment of Figs. 4a-4c, selective driving of either one, or both of the rotors 502 and 503 may be achieved. Similarly to the embodiment of Figs. 4a-4c, the arrangement of Figs. 5a-5c may be used to achieve a dual output with only a single set of windings.

Whilst only one rotor pole for each rotor 502 and 503, and four winding poles are shown in Figs. 5a-5c, other suitable numbers of poles may be included in the windings 501 and/or the rotors 502 and 503.

In any of the above examples, the rotors or motors may only be driven to counter-rotate to reduce and/or eliminate acceleration/deceleration force and/or gyroscopic forces during acceleration, deceleration, or tilting of the housing in which the motor(s) are located by suitable control circuitry.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A kitchen appliance for processing food, comprising:
an anti-torque mechanism, wherein the anti-torque mechanism is arranged so as to counter the torque exerted on the kitchen appliance by moving parts of the kitchen appliance.

2. A kitchen appliance according to Claim 1, further comprising a motor for driving a tool of the kitchen appliance, wherein the moving parts of the kitchen appliance include at least the motor.

3. A kitchen appliance according to Claim 2, wherein the anti-torque mechanism is arranged to counter-rotate relative to the motor, preferably wherein the anti-torque mechanism is arranged to rotate about an axis that is coaxial to the drive axis of the motor.

4. A kitchen appliance according to any preceding claim, wherein the masses and/or dimensions of the moving parts of the kitchen appliance and the anti-torque mechanism is/are substantially equal, and/or the moving parts of the kitchen appliance and the anti-torque mechanism are configured to be driven at substantially the same speed, and preferably at the same speed.

5. A kitchen appliance according to any of the preceding claims, further comprising a controller for varying the torque of the moving parts of the kitchen appliance and/or of the anti-torque mechanism, and preferably further comprising a sensor for sensing speed, torque and/or current of the motor and/or anti-torque mechanism, wherein the torque of the anti-torque mechanism is adapted to be varied by the controller in dependence on the sensor readings.

6. A kitchen appliance according to any preceding claim, wherein the anti-torque mechanism comprises a rotating mass, for example a flywheel.

7. A kitchen appliance according to Claim 2 or any of Claims 3 to 6 as dependent on Claim 2, wherein both the motor and the anti-torque mechanism drive a tool of the kitchen appliance, and/or wherein the motor drives the anti-torque mechanism so as to counter the torque exerted on the kitchen appliance by the moving parts of the kitchen appliance, and/or wherein the anti-torque mechanism comprises a second motor that drives the anti-torque mechanism so as to counter the torque exerted on the kitchen appliance by the moving parts of the kitchen appliance, and/or wherein the motor comprises the anti-torque mechanism, and wherein the motor is arranged to drive the anti-torque mechanism so as to counter the torque exerted on the kitchen appliance by the moving parts of the kitchen appliance.

8. A kitchen appliance according to Claim 2 or any of Claims 3 to 7 as dependent on Claim 2, wherein the motor comprises at least two rotors, and wherein both rotors share a common stator, preferably wherein the stator is configured to drive the at least two rotors in opposite directions, and/or wherein the stator comprises a plurality of poles, wherein the poles are arranged so that the direction in which successive poles are energized changes at a location between the at least two rotors so that the at least two rotors rotate in opposite directions.

9. A kitchen appliance according to Claim 8, wherein the stator comprises a plurality of poles comprising windings, wherein the windings cross one another at a location between the at least two rotors, and/or wherein the stator comprises a plurality of poles, wherein the poles are non-intersecting with the drive axis of the motor, and/or further comprising a sensor for sensing orientation of at least one of the rotors, and preferably further comprising control circuitry configured selectively to energise a portion of the stator and/or a portion of the rotors based on the orientation of at least one of the rotors.

10. A kitchen appliance according to Claims 8 or Claim 9, further comprising a switch for selectively electrically isolating a portion of the stator and/or the rotors so as to control the speed of at least one of the rotors, preferably further comprising a current controller for selectively controlling current output to a portion of the stator and/or the rotors so as to control the speed and/or direction of at least one of the rotors, and/or wherein the motor is a reluctance motor, and preferably a switched reluctance or a synchronous reluctance motor.

11. A kitchen appliance according to Claim 2 or any of Claims 3 to 9 as dependent on Claim 2, wherein the motor and the anti-torque mechanism comprise drive outputs, the drive outputs being arranged to face one another, preferably wherein the motor and the anti-torque mechanism comprise drive outputs, the drive outputs being arranged to face away from one another, and/or wherein the motor and the anti-torque mechanism comprise drive outputs, the drive outputs being arranged to face the same direction.

12. A kitchen appliance according to any preceding claim, wherein the kitchen appliance is a hand tool, for example a hand blender or mixer.

13. A kitchen appliance for processing food comprising:
at least one motor;
two rotors, wherein the two rotors are associated with the at least one motor; and
a drive shaft, driven by the two rotors, for driving a tool of the kitchen appliance.

14. An electric motor arrangement comprising:
a stator; and
at least two rotors;
wherein the at least two rotors are arranged so that they are driven by the stator, and preferably wherein the stator is configured to drive two of the at least two rotors in opposite directions.

15. An electric motor arrangement according to Claim 14, wherein the stator comprises a plurality of poles, wherein the poles are arranged so that the direction in which successive poles are energized changes at a location between the rotors so that the at least two rotors rotate in opposite directions, preferably wherein the stator comprises a plurality of poles comprising windings, wherein the windings cross one another at a location between the at least two rotors, and/or wherein the stator comprises a plurality of poles, and the plurality of poles are non-intersecting with the axis of rotation of the at least two rotors.

16. An electric motor arrangement according to Claim 14 or 15, further comprising a sensor for sensing orientation of at least one of the rotors, preferably relative to the poles of the stator, preferably further comprising control circuitry configured selectively to energise a portion of the stator and/or a portion of the at least two rotors based on the sensed orientation of at least one of the rotors, so as to control the speed and/or direction of at least one of the rotors and/or further comprising a switch for selectively electrically isolating a portion of the stator and/or a portion of the at least two rotors so as to control the speed of at least one of the rotors, and/or further comprising a current controller for selectively controlling current output to a portion of the stator and/or a portion of the at least two rotors so as to control the speed and/or direction of at least one of the rotors.

17. An electric motor arrangement according to any of Claims 14 to 16, wherein the at least two rotors are arranged to rotate coaxially, preferably wherein the electric motor arrangement is a reluctance motor, and preferably a switched reluctance or a synchronous reluctance motor.

18. A kitchen appliance for processing food, comprising an electric motor arrangement according to any of Claims 14 to 17, preferably wherein the kitchen appliance is a hand-held kitchen appliance.
